# EUROPEAN PATENT SPECIFICATION

(11) **EP 3 230 612 B1**
(45) Date of publication and mention of the grant of the patent: **06.02.2019**
(21) Application number: 15804759.7
(22) Date of filing: 03.12.2015
(51) Int. Cl.: F16D 27/00, F01P 5/04, F01P 11/06, F01P 7/08

(54) **A FAN DRIVE ASSEMBLY**
GEBLÄSEANTRIEBSANORDNUNG
ENSEMBLE D'ENTRAÎNEMENT DE VENTILATEUR

(30) Priority: 12.12.2014 EP 14290378
(43) Date of publication of application: 18.10.2017
(73) Proprietor: AGCO International GmbH, 8212 Neuhausen am Rheinfall (CH)
(72) Inventor: MARCANT, Julien, 60026 Beauvais (FR)
(74) Representative: AGCO Intellectual Property Department
(86) International application number: PCT/EP2015/078449
(87) International publication number: WO 2016/091701

(56) References cited:
- EP-A2- 0 499 698
- JP-A- H 084 528
- US-A- 1 525 207
- US-A- 2 788 775
- US-A- 3 095 766

## Description

### Field of the Invention

The present invention relates to a fan drive assembly for a vehicle, in particular a reversible fan drive assembly.

### Background of the Invention

Modern vehicles are provided with engine fans used to draw a cooling airflow through a radiator or heat exchanger for the purposes of temperature regulation of a vehicle fluid, such as an engine coolant, a HVAC system, etc.

During the lifetime of the vehicle, the blades of the fan, as well as any associated engine grilles, radiators, etc., may become covered with layers of dust or other debris. This may result in blockages to the airflow drawn by the fan, causing a loss in engine efficiency due to the reduced operational capacity of the cooling system. Such blockages can also result in an increased pressure drop across the system, which can lead to a corresponding increase in fan consumption. This effect can be particularly pronounced in the case of agricultural vehicles, such as tractors or combine harvesters, which are often operated in environments having high levels of environmental debris, e.g. dust, chaff, etc.

It is known to provide engine fans having reversible fan blades, wherein the fan blades may be rotated about an axis on the hub of the fan, such that the direction of airflow generated by the fan is reversed. This reversed airflow can act to blow out any accumulated dust or debris from the flow path of the fan, thereby cleaning the system for future operation.

However, engine fans having such reversible fan blades are a relatively complicated construction, involving a number of separate moving parts which must be accurately controlled and actuated to ensure optimal fan performance. Accordingly, engine fans having such reversible fan blades are relatively expensive components, requiring significant manufacturing time and cost, and which can present significant difficulties regarding repair and service in the event of a fault.

Alternatively, hydraulic or electrical fans can be made to reverse fan direction. However, such fan constructions generally have poor efficiency, when compared with belt-driven fans.

An example of a prior art fan construction having a slidable clutch can be seen in Japanese patent document JPH084528. However, the use of such a clutch arranged to slide between respective forward and reverse pulleys can present service problems, e.g. due to the use of moving parts having increased movement range. Documents US2788775 A1 and US3095766 A1 also disclose such arrangements.

It is an object of the invention to provide an alternative engine fan which addresses the above issues.

### Summary of the Invention

A fan drive assembly according to the invention is defined in claim 1.

As the reverse direction for the fan drive will most likely be used less often than the forward drive, the reverse clutch will only occasionally be engaged. In such situations, by providing the reverse clutch with a greater torque capacity than the minimum torque capacity level of the forward clutch, a reverse fan rotation will be ensured when the reverse clutch can be engaged, whether or not the forward clutch is also engaged, as the reverse torque can exceed the forward torque. The torque capacity can be understood as the torque handling ability of a clutch, and can be dependent on any number of factors of the clutch construction, e.g. number and type of clutch plates, dimensions, diaphragm load rating, etc.

In one aspect, the fan drive assembly is configured such that the forward clutch can be at least partly disengaged when the reverse clutch is engaged. By at least partly releasing the forward clutch, the torque capacity of the forward clutch may be reduced, ensuring that the fan rotates in the reverse direction due to the engagement of the reverse clutch. In a further additional or alternative aspect, the torque capacity of the forward clutch is adjustable, wherein the forward clutch is controlled such that, when the reverse clutch is engaged, the torque capacity of the forward clutch is less than the torque capacity of the reverse clutch.

The torque capacity of the forward clutch may be adjustable, e.g. by controlling the level of engagement of the clutch. In this case, the torque capacity of the forward clutch may be reduced when it is desired to operate the fan in a reverse direction, so that the engagement of the reverse clutch, having a greater torque capacity than the minimum torque capacity level of the forward clutch, will cause the forward clutch to slip.

Providing such a controllable clutch can result in a more efficient system construction, as in normal forward operation, a relatively large torque capacity forward clutch may be used, while a relatively small, more cost-efficient, clutch may be used for occasional reverse operation.

Providing such a clutch system results in a reversible fan system which is of a relatively simple construction, and which allows for easier operation and service, when compared to prior art adjustable pitch fans.

It will be understood that the forward and reverse clutches may be coupled with respective forward and reverse drive shafts. Alternatively, the fan may be provided on a fan shaft, wherein the fan shaft is selectably coupled with respective forward and reverse clutches.

According to the invention, the reverse clutch is an on/off clutch.

By use of the term on/off clutch, it will be understood that the clutch is either in a substantially engaged or a substantially disengaged state with a reverse shaft. When the clutch is engaged, the full reverse force is applied to the shaft. When the clutch is disengaged, the shaft is free to rotate in the forward direction.

According to the invention, the forward clutch is a viscous clutch. Preferably, the reverse clutch is a dry clutch. The reverse clutch may comprise any suitable mechanical or electromechanical clutch.

Preferably, the forward clutch is selectably coupled to a forward drive, preferably using a forward fan belt.

Preferably, the reverse clutch is selectably coupled to a reverse drive, preferably using a reverse fan belt.

Preferably, the forward drive and the reverse drive are provided as opposite output shafts from a bevel gearbox.

A bevel gear box provides a compact mechanism which can output both forward and reverse driving motion. The bevel gear box may itself be driven by any suitable aspect of the greater vehicle engine. In a preferred aspect, the bevel gear box may be located below the fan and clutches, to minimise the space required for the fan drive assembly. It will be understood that any suitable driving mechanism may be used as an alternative to the bevel gear box, e.g. an epicyclical gear system.

In one aspect, the forward and reverse clutches are located at opposite sides of the fan.

Alternatively, the forward and reverse clutches can be located at the same side of the fan.

There is further provided a vehicle, preferably an agricultural vehicle, comprising a fan drive assembly as described above.

Preferably, the vehicle further comprises an Engine Control Unit (ECU), wherein the ECU is operable to control the reverse clutch of the fan drive assembly to perform a reverse fan flow of the fan drive assembly.

Preferably, the ECU is arranged to receive a fan clean command from an operator, and responsive to said fan clean command, the ECU operates the fan drive assembly in a reverse direction to clean the fan or any associated components of debris.

### Detailed Description of the Invention

Embodiments of the invention will now be described, by way of example only, with reference to the accompanying drawings, in which:
Fig. 1 is an illustration of an agricultural tractor;
Fig. 2 is an isometric perspective view of a fan drive assembly according to the invention; and
Fig. 3 is a side plan view of the fan drive assembly of Fig. 2.

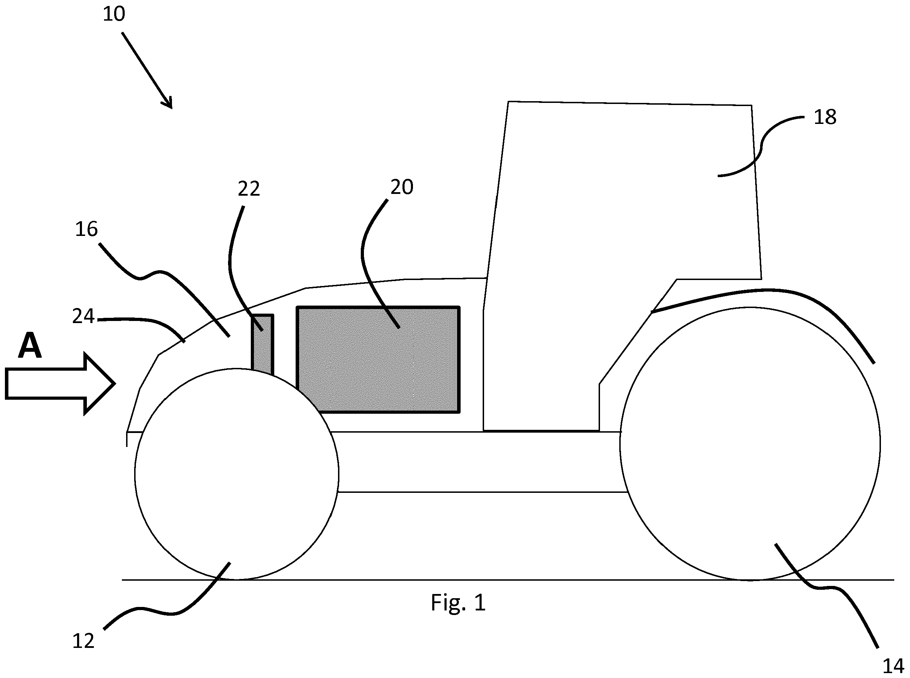

With reference to Fig. 1, an agricultural tractor is indicated at 10. The tractor 10 comprises front wheels 12, rear wheels 14, an engine section 16 and a cab section 18. An engine 20 is provided in the engine section 16, wherein a cooling package 22 is provided adjacent the engine 20, for the cooling of engine fluid, a HVAC system, transmission oil, etc. The engine section 16 is provided with an engine hood 24 to cover the contained components. It will be understood that the engine hood 24 may be provided with suitable grilles or vents, to allow for the flow of air to and from the cooling package 22.

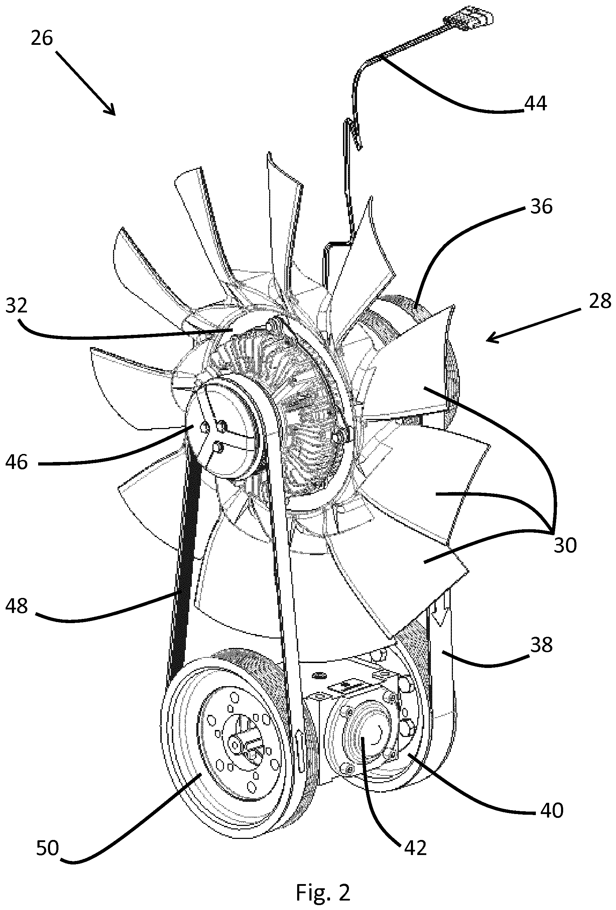

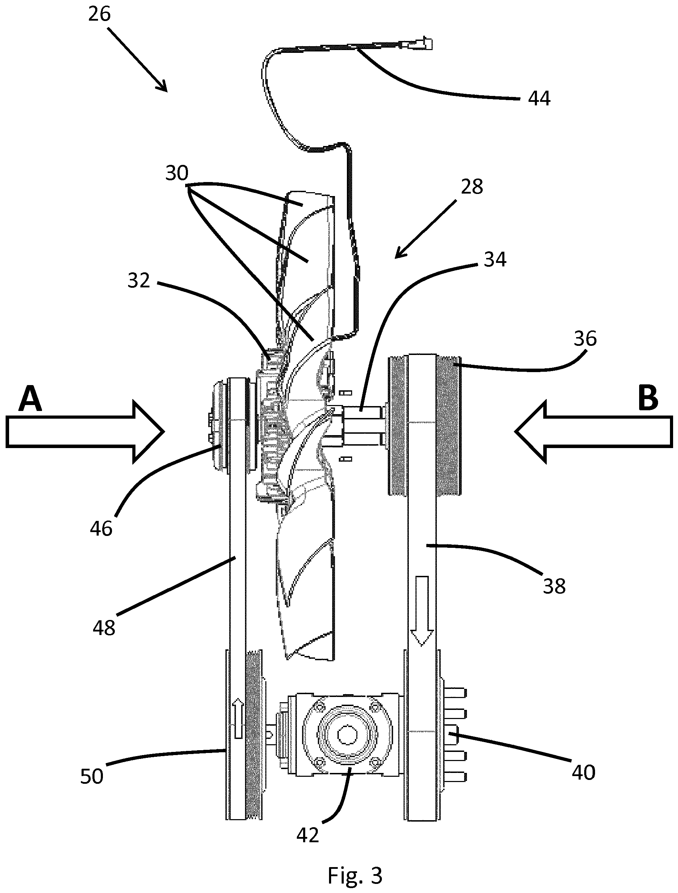

The cooling package 22 comprises at least one radiator or heat exchanger (not shown), and an engine fan. Turning to Figs. 2 and 3, a fan drive assembly for use in the cooling package 22 is indicated generally at 26.

In a first embodiment, the fan drive assembly 26 comprises a fan 28 having a plurality of fan blades 30 provided on a fan hub 32. The fan 28 is provided on a rotating shaft 34. The shaft 34 is coupled to a forward clutch 36 which is driven by a forward belt 38, which can be provided on a pulley arranged on the forward clutch 36. The forward belt 38 connects the forward clutch 36 to a forward drive shaft 40. The forward drive shaft 40 is provided as an output from a bevel gear box 42, which may be driven by a suitable connection (not shown) to the vehicle engine 20. The forward clutch 36 is provided as a viscous clutch.

In an alternative embodiment, the fan blades 30 may be provided on the forward clutch itself, the forward clutch effectively arranged as the fan hub 32. The clutch may then be selectively coupled with fan shaft 34, which is driven by pulley 36 coupled to forward fan belt 38.

The fan drive assembly 26 further comprises an electrical harness 44, which provides a connection between the fan 28 and a suitable Engine Control Unit (ECU, not shown) of the vehicle. The ECU may be arranged to control the rotational speed of the fan 28, to thereby control the cooling effect of the cooling package 22.

In normal operation modes, with regard to the numbering of the first embodiment, the viscous forward clutch 36 is engaged, such that the fan 28 rotates in a forward direction as driven by the connection to the forward drive shaft 40. Accordingly, air is drawn through the fan 28 in a forward direction, as indicated by arrow A (shown in Figs. 1 and 3). The drawn air acts to cool the radiators and heat exchangers of the cooling package 22 during normal operation.

The fan drive assembly 26 further comprises a reverse clutch 46. In the embodiment shown in the figures, the reverse clutch 46 is located on the opposite side of the fan 28 to the forward clutch 36, but it will be understood that the forward and reverse clutches 36,46 may alternatively be located at the same side of the fan 28.

The reverse clutch 46 is driven by a reverse belt 48 via a suitable pulley, which connects the reverse clutch 46 to a reverse drive shaft 50. The reverse drive shaft 50 is provided as an opposed output from the bevel gear box 42 to the forward drive shaft 40, but it will be understood that any suitable drive mechanism arranged to provide forward and reverse drives may be used, e.g. using an epicyclical gear system. The reverse clutch 46 is provided as a dry clutch, but any suitable clutch system may be used. The reverse clutch is preferably provided as an electromagnetic clutch, which can be controlled using a suitable control signal provided from the vehicle ECU via the electrical harness 44, or using a further dedicated electrical harness (not shown).

In one embodiment, the reverse clutch 46 may be selectively coupled to the fan shaft 34. In an alternative embodiment, the reverse clutch 46 may be selectively coupled to a reverse fan shaft (not shown), to transfer reverse rotational force to the fan 28. In a further alternative, the reverse clutch 46 may be mounted directly to the fan hub 32, the reverse clutch 46 selectively engaging with the reverse drive provided by the reverse belt 48.

The reverse clutch 46 is preferably provided as an on/off clutch, wherein the clutch is either substantially fully engaged or disengaged. In one aspect, the reverse clutch 46 is selected such that the torque capacity of the reverse clutch 46 is greater than the torque capacity of the forward clutch 36.

When it is desired to provide for a reverse flow of air, e.g. in order to clear the cooling package 22 and any associated grilles or vents of accumulated dust and debris, the reverse clutch 46 is instructed to engaged with the fan shaft 34. In one aspect, the forward clutch 36 may be fully disengaged from the fan shaft 34 when a reverse flow is desired. However, as the torque capacity of the reverse clutch 46 is greater than that of the forward clutch 36, if the forward clutch 36 is partly or fully engaged, the greater clutch strength of the reverse clutch 46 will cause the forward clutch 36 to slip, and results in rotation of the fan shaft 34 and the fan 28 in the reverse direction.

In an alternative aspect, the forward clutch 36 is controllable, to allow for adjustment of the torque capacity of the clutch. In this case, the torque capacity of the forward clutch 36 is reduced when it is desired to apply a reverse rotational flow, such that the instantaneous torque capacity of the forward clutch 36 is less than the torque capacity of the engaged reverse clutch 46.

This configuration allows for the use of a forward clutch having a relatively large maximum torque capacity, which has at least a minimum torque capacity less than the torque capacity of the engaged reverse clutch. As a result, the reverse clutch may be provided as a relatively small component having relatively low torque specifications, minimising the additional cost and space required for the system.

As the fan blades 30 rotate in the reverse direction, airflow through the fan 28 is reversed, as indicated by arrow B (Fig. 3). The reversed airflow acts to blow any dust or debris from the fan blades and the radiators and heat exchangers of the cooling package 22, as well as from any vents or grilles provided in the vehicle.

The reverse operation may be controlled by way of an automatically-generated signal from the vehicle ECU, and/or from a user-input signal, as to when a reverse flow cleaning of the vehicle components is required.

As the fan drive assembly 26 is provided with a reversible fan drive, accordingly a relatively simple fan construction can be used, without the need for individually pitchable fan blades. As a result, the fan drive assembly 26 is of a relatively simple construction, which can be easily and efficiently manufactured and services, with minimal cost.

The invention is not limited to the embodiments described herein, and may be modified or adapted without departing from the scope of the present invention.

## Claims

1. A fan drive assembly for a vehicle comprising:
a fan (30);
a forward clutch (36) arranged to rotate the fan in a forward direction, the forward clutch being a viscous clutch; and
a reverse clutch (46) arranged to rotate the fan in a reverse direction, the reverse clutch being an on/off clutch which is engaged when reverse fan rotation is desired,
wherein the reverse clutch is selected such that the torque capacity of the engaged reverse clutch is greater than the minimum torque capacity level of the forward clutch when the reverse clutch is engaged, to rotate the fan in a reverse direction.

2. The fan drive assembly of claim 1, wherein the fan drive assembly is configured such that the forward clutch is partly disengaged when the reverse clutch is engaged.

3. The fan drive assembly of any one of claims 1-2, wherein the torque capacity of the forward clutch is adjustable, wherein the forward clutch is controlled such that, when the reverse clutch is engaged, the torque capacity of the forward clutch is adjusted to be less than the torque capacity of the engaged reverse clutch.

4. The fan drive assembly of any preceding claim, wherein the reverse clutch is a dry clutch, preferably an electromagnetic clutch.

5. The fan drive assembly of any preceding claim, wherein the forward clutch is coupled to a forward drive, preferably using a forward fan belt.

6. The fan drive assembly of any preceding claim, wherein the reverse clutch is coupled to a reverse drive, preferably using a reverse fan belt.

7. The fan drive assembly of any preceding claim, wherein the forward drive and the reverse drive are provided as opposite output shafts from a bevel gearbox.

8. The fan drive assembly of any preceding claim, wherein the forward and reverse clutches are located at opposite sides of the fan.

9. The fan drive assembly of any one of claims 1-7, wherein the forward and reverse clutches can be located at the same side of the fan.

10. A vehicle, preferably an agricultural vehicle, comprising a fan drive assembly as claimed in any one of claims 1-9.

11. The vehicle of claim 10, wherein the vehicle further comprises an Engine Control Unit (ECU), wherein the ECU is operable to control the reverse clutch of the fan drive assembly to perform a reverse fan flow of the fan drive assembly.

12. The vehicle of claim 11, wherein the ECU is arranged to receive a fan clean command from an operator, and responsive to said fan clean command, the ECU operates the fan drive assembly in a reverse direction to clean the fan or any associated components of debris.

## Patentansprüche

1. Lüfterantriebsbaugruppe für ein Fahrzeug mit:
einem Lüfter (30);
einer Vorwärts-Kupplung (36),
die für eine Verdrehung des Lüfters in eine Vorwärts-Richtung eingerichtet ist, wobei die Vorwärts-Kupplung eine viskose Kupplung ist; und
einer Rückwärts-Kupplung (46),
die für eine Verdrehung des Lüfters in eine Rückwärts-Richtung eingerichtet ist, wobei die Rückwärts-Kupplung eine An/Aus-Kupplung ist, die wirksam ist, wenn eine RückwärtsDrehung des Lüfters gewünscht ist,
wobei die Rückwärts-Kupplung derart ausgewählt ist, dass die Drehmoment-Kapazität der wirksamen Rückwärts-Kupplung größer ist als das minimale Drehmoment-Kapazitätslevel der Vorwärts-Kupplung, wenn die Rückwärts-Kupplung wirksam ist, um den Lüfter in eine Rückwärts-Richtung zu verdrehen.

2. Lüfterantriebsbaugruppe nach Anspruch 1, wobei die Lüfterantriebsbaugruppe derart konfiguriert ist, dass die Vorwärts-Kupplung teilweise unwirksam ist, wenn die Rückwärts-Kupplung wirksam ist.

3. Lüfterantriebsbaugruppe nach einem der Ansprüche 1 bis 2, wobei die Drehmoment-Kapazität der Vorwärts-Kupplung einstellbar ist und die Vorwärts-Kupplung derart gesteuert oder geregelt wird, dass, wenn die Rückwärts-Kupplung wirksam ist, die Drehmoment-Kapazität der Vorwärts-Kupplung so eingestellt wird, dass diese kleiner ist als die Drehmoment-Kapazität der wirksamen Rückwärts-Kupplung.

4. Lüfterantriebsbaugruppe nach einem der vorhergehenden Ansprüche, wobei die Rückwärts-Kupplung eine trockene Kupplung ist, vorzugsweise eine elektromagnetische Kupplung.

5. Lüfterantriebsbaugruppe nach einem der vorhergehenden Ansprüche, wobei die Vorwärts-Kupplung mit einem Vorwärts-Antrieb, vorzugsweise unter Verwendung eines Vorwärts-Lüfter-Riemens, gekoppelt ist.

6. Lüfterantriebsbaugruppe nach einem der vorhergehenden Ansprüche, wobei die Rückwärts-Kupplung mit einem Rückwärts-Antrieb, vorzugsweise unter Verwendung eines Rückwärts-Lüfter-Riemens, gekoppelt ist.

7. Lüfterantriebsbaugruppe nach einem der vorhergehenden Ansprüche, wobei der Vorwärts-Antrieb und der Rückwärts-Antrieb gegenüberliegende Ausgangswellen eines Kegelradgetriebes sind.

8. Lüfterantriebsbaugruppe nach einem der vorhergehenden Ansprüche, wobei die Vorwärts-Kupplung und die Rückwärts-Kupplung auf gegenüberliegenden Seiten des Lüfters angeordnet sind.

9. Lüfterantriebsbaugruppe nach einem der Ansprüche 1 bis 7, wobei die Vorwärts-Kupplung und die Rückwärts-Kupplung auf derselben Seite des Lüfters angeordnet sein können.

10. Fahrzeug, vorzugsweise landwirtschaftliches Fahrzeug, mit einer Lüfterantriebsbaugruppe nach einem der Ansprüche 1 bis 9.

11. Fahrzeug nach Anspruch 10, wobei das Fahrzeug des Weiteren eine Motorsteuereinheit oder Motorregeleinheit (ECU) aufweist, wobei die ECU betreibbar ist für eine Steuerung oder Regelung der Rückwärts-Kupplung der Lüfterantriebsbaugruppe zur Ausführung eines Rückwärts-Lüfterflusses der Lüfterantriebsbaugruppe.

12. Fahrzeug nach Anspruch 11, wobei die ECU zum Empfang eines Kommandos eines Nutzers zur Reinigung des Lüfters eingerichtet ist und in Abhängigkeit von dem Kommando zur Reinigung des Lüfters die ECU die Lüfterantriebsbaugruppe in eine Rückwärts-Richtung betreibt, um den Lüfter oder anderen zugeordneten Komponenten hinsichtlich Fremdkörpern zu reinigen.

## Revendications

1. Ensemble d'entraînement de ventilateur pour un véhicule comprenant :
un ventilateur (30) ;
un embrayage de marche avant (36) agencé pour faire tourner le ventilateur dans un sens vers l'avant, l'embrayage de marche avant étant un embrayage visqueux ; et
un embrayage de marche arrière (46) agencé pour faire tourner le ventilateur dans un sens vers l'arrière, l'embrayage de marche arrière étant un embrayage marche/arrêt (on/off) qui est enclenché lorsqu'une rotation de ventilateur vers l'arrière est souhaitée,
dans lequel l'embrayage de marche arrière est sélectionné de sorte que la capacité de couple de l'embrayage de marche arrière enclenché soit supérieure au niveau de capacité de couple minimal de l'embrayage de marche avant lorsque l'embrayage de marche arrière est enclenché, pour faire tourner le ventilateur dans un sens vers l'arrière.

2. Ensemble d'entraînement de ventilateur selon la revendication 1, dans lequel l'ensemble d'entraînement de ventilateur est configuré de sorte que l'embrayage de marche avant soit partiellement désenclenché lorsque l'embrayage de marche arrière est enclenché.

3. Ensemble d'entraînement de ventilateur selon l'une quelconque des revendications 1 à 2, dans lequel la capacité de couple de l'embrayage de marche avant est ajustable, dans lequel l'embrayage de marche avant est commandé de sorte que, lorsque l'embrayage de marche arrière est enclenché, la capacité de couple de l'embrayage de marche avant soit ajustée pour être inférieure à la capacité de couple de l'embrayage de marche arrière enclenché.

4. Ensemble d'entraînement de ventilateur selon l'une quelconque des revendications précédentes, dans lequel l'embrayage de marche arrière est un embrayage sec, de préférence un embrayage électromagnétique.

5. Ensemble d'entraînement de ventilateur selon l'une quelconque des revendications précédentes, dans lequel l'embrayage de marche avant est couplé à un entraînement de marche avant, de préférence en utilisant une courroie de ventilateur de marche avant.

6. Ensemble d'entraînement de ventilateur selon l'une quelconque des revendications précédentes, dans lequel l'embrayage de marche arrière est couplé à un entraînement de marche arrière, de préférence en utilisant une courroie de ventilateur de marche arrière.

7. Ensemble d'entraînement de ventilateur selon l'une quelconque des revendications précédentes, dans lequel l'entraînement de marche avant et l'entraînement de marche arrière sont prévus en tant qu'arbres de sortie opposés d'une transmission à engrenages coniques.

8. Ensemble d'entraînement de ventilateur selon l'une quelconque des revendications précédentes, dans lequel les embrayages de marche avant et de marche arrière sont situés à des côtés opposés du ventilateur.

9. Ensemble d'entraînement de ventilateur selon l'une quelconque des revendications 1 à 7, dans lequel les embrayages de marche avant et de marche arrière peuvent être situés du même côté du ventilateur.

10. Véhicule, de préférence véhicule agricole, comprenant un ensemble d'entraînement de ventilateur selon l'une quelconque des revendications 1 à 9.

11. Véhicule selon la revendication 10, dans lequel le véhicule comprend en outre une unité de commande de moteur (ECU), dans lequel l'ECU est utilisable pour commander à l'embrayage de marche arrière de l'ensemble d'entraînement de ventilateur d'effectuer un flux de ventilateur arrière de l'ensemble d'entraînement de ventilateur.

12. Véhicule selon la revendication 11, dans lequel l'ECU est agencée pour recevoir une commande de nettoyage de ventilateur en provenance d'un opérateur, et, en réponse à ladite commande de nettoyage de ventilateur, l'ECU fait fonctionner l'ensemble d'entraînement de ventilateur dans un sens vers l'arrière pour nettoyer le ventilateur ou n'importe quel composant associé de tout débris.
